# EUROPEAN PATENT APPLICATION

(11) **EP 3 929 768 A1**
(43) Date of publication of application: **29.12.2021**
(21) Application number: 21163150.2
(22) Date of filing: 17.03.2021
(51) Int. Cl.: G06F 16/332

(54) **METHOD AND APPARATUS FOR GENERATING TRIPLE SAMPLE, ELECTRONIC DEVICE AND COMPUTER STORAGE MEDIUM**

(30) Priority: 24.06.2020 CN 202010587031
(71) Applicant: Beijing Baidu Netcom Science and Technology Co., Ltd., Beijing 100085 (CN)
(72) Inventor: LI, Hongyu, Beijing, Beijing 100085 (CN); LIU, Jing, Beijing, Beijing 100085 (CN)
(74) Representative: dompatent von Kreisler Selting Werner - Partnerschaft von Patent- und Rechtsanwälten mbB

(57) **Abstract**

The present application discloses a method and apparatus for generating a triple sample, an electronic device, a storage medium, and a computer program product, which relates to the field of natural language processing technologies based on artificial intelligence and the field of deep learning technologies. An implementation includes acquiring a paragraph text in the triple sample; extracting at least one answer fragment from the paragraph text; and generating corresponding questions by adopting a pre-trained question generating model based on the paragraph text and each answer fragment respectively, so as to obtain the triple sample. In the present application, since trained based on a pre-trained semantic representation model, the pre-trained question generating model has quite good accuracy, and therefore, the triple sample (Q, P, A) generated with the question generating model has quite high accuracy.

## Description

### Field of the Disclosure

The present application relates to the field of computer technologies, and particularly to the field of natural language processing technologies based on artificial intelligence and the field of deep learning technologies, and in particular, to a method and apparatus for generating a triple sample, an electronic device, a storage medium, and a computer program product.

### Background of the Disclosure

In a natural language processing (NLP) process, a question generation technology means that a natural text paragraph P is given, a certain answer fragment A for which a question may be asked is found in the paragraph P, and the question is asked for the answer fragment A, thereby generating the question Q. With the question generation technology, massive triples (Q, P, A) may be generated from massive natural texts. These triples may provide a large number of training samples for sequencing paragraphs and training a reading comprehension model, thus saving the cost for manually annotating the samples; meanwhile, a search and question-answering system may be supported by means of retrieval according to a key-value (kv).

For a method for acquiring a sample of a triple (Q, P, A) in the prior art, the training process is directly performed at a data set of a target field by mainly using traditional sequence-to-sequence model structures, such as a recurrent neural network (RNN), a long short-term memory (LSTM) network, a transformer, or the like. Then, the corresponding generated question Q is generated from the provided paragraph P and the answer fragment A with the trained model.

However, the data set in the target field has a small data volume, which results in a non-ideal effect of the trained model, and thus poor accuracy when the trained model is used to generate the corresponding generated problem Q, causing poor accuracy of the sample of the triplet (Q, P, A) generated with the existing way.

### Summary of the Disclosure

In order to solve the above-mentioned problems, the present application provides a method and apparatus for generating a triple sample, an electronic device, a storage medium, and a computer program product.

According to an aspect of the present application, there is provided a method for generating a triplet sample, including:
acquiring a paragraph text in the triple sample;
extracting at least one answer fragment from the paragraph text; and
generating corresponding questions by adopting a pre-trained question generating model based on the paragraph text and each answer fragment respectively, so as to obtain the triple sample, wherein the pre-trained question generating model is trained based on a pre-trained semantic representation model.

According to another aspect of the present application, there is provided an apparatus for generating a triplet sample, including:
an acquiring module configured to acquire a paragraph text in the triple sample;
an answer extracting module configured to extract at least one answer fragment from the paragraph text; and
a question generating module configured to generate corresponding questions by adopting a pre-trained question generating model based on the paragraph text and each answer fragment respectively, so as to obtain the triple sample, wherein the pre-trained question generating model is trained based on a pre-trained semantic representation model.

According to still another aspect of the present application, there is provided an electronic device, including:
at least one processor; and
a memory connected with the at least one processor communicatively;
wherein the memory stores instructions executable by the at least one processor to cause the at least one processor to perform the method as mentioned above.

According to yet another aspect of the present application, there is provided a non-transitory computer readable storage medium with computer instructions stored thereon, wherein the computer instructions are used for causing a computer to perform the method as mentioned above.

According to yet another aspect of the present application, there is provided a computer program product comprising instructions which, when the program is executed by a computer, cause the computer to perform the method as mentioned above.

According to the technology of the present application, since trained based on the pre-trained semantic representation model, the pre-trained question generating model has quite good accuracy, and therefore, the triple sample (Q, P, A) generated with the question generating model has quite high accuracy.

It should be understood that the statements in this section are not intended to identify key or critical features of the embodiments of the present disclosure, nor limit the scope of the present disclosure. Other features of the present disclosure will become apparent from the following description.

### Brief Description of Drawings

The drawings are used for better understanding the present solution and do not constitute a limitation of the present application. In the drawings:
Fig. 1 is a schematic diagram according to a first embodiment of the present application;
Fig. 2 is a schematic diagram according to a second embodiment of the present application;
Fig. 3 is an exemplary view of the embodiment shown in Fig. 2;
Fig. 4 is a schematic diagram according to a third embodiment of the present application;
Fig. 5 is a schematic diagram according to a fourth embodiment of the present application; and
Fig. 6 is a block diagram of an electronic device configured to implement a method for generating a triple sample according to the embodiments of the present application.

### Detailed Description of Preferred Embodiments

The following part will illustrate exemplary embodiments of the present application with reference to the figures, including various details of the embodiments of the present application for a better understanding. The embodiments should be regarded only as exemplary ones. Therefore, those skilled in the art should appreciate that various changes or modifications can be made with respect the embodiments described herein without departing from the scope and spirit of the present application. Similarly, for clarity and conciseness, the descriptions of the known functions and structures are omitted in the descriptions below.

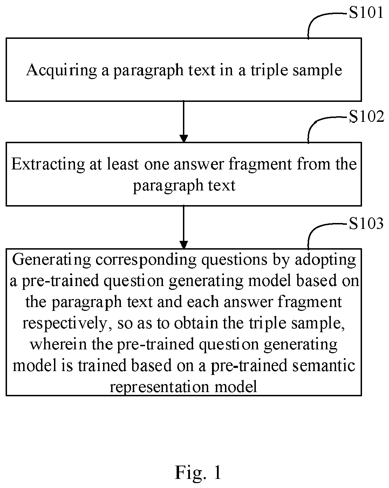

Fig. 1 is a schematic diagram according to a first embodiment of the present application; as shown in Fig. 1, this embodiment provides a method for generating a triplet sample, which may include the following steps:
S101: acquiring a paragraph text in the triple sample;
   an apparatus for generating a triple sample serves as a performing subject of the method for generating a triple sample according to this embodiment, and may be configured as an electronic subject or an application adopting software integration, and when in use, the application is run on a computer device to generate the triple sample.
   The paragraph text in this embodiment is a paragraph of any acquirable article. For example, in order to generate the triple sample, in this embodiment, any article in various books, periodicals and magazines may be acquired, and any paragraph may be extracted, so as to generate the triple sample. In addition, in this embodiment, any article may also be acquired from network platforms, such as news, electronic books, forums, or the like, in a network, and any paragraph text in the article may be extracted, so as to generate the triple sample.
S102: extracting at least one answer fragment from the paragraph text;
   the paragraph text in this embodiment at least includes a sentence. Generally, one paragraph text may include a plurality of sentences. Since the paragraph text has rich contents, the number of the answer fragments which may be used as answers in the paragraph text is also at least one. Based on this, at least one answer fragment may be extracted from the paragraph text, and at the moment, the paragraph text and each answer fragment may form a group (P, A).
S103: generating corresponding questions by adopting a pre-trained question generating model based on the paragraph text and each answer fragment respectively, so as to obtain the triple sample, wherein the pre-trained question generating model is trained based on a pre-trained semantic representation model.

For the above-mentioned obtained paragraph text and each answer fragment, i.e., the group (P, A), the pre-trained question generating model may be used to generate the corresponding question Q, and at the moment, the triple (Q, P, A) is obtained.

The pre-trained question generating model in this embodiment is trained based on the pre-trained semantic representation model; that is, in a fine-tuning stage of the training process, a small number of triple samples (Q, P, A) collected in a target field are used to finely tune the pre-trained semantic representation model, so as to obtain the question generating model. Since the question generating model is obtained by adopting the pre-trained semantic representation model through the fine tuning action in the fine-tuning stage, without the requirement of recollecting a large amount of training data, a generation-task-oriented pre-training process is realized, and the question generating model has a low acquisition cost; since the pre-trained semantic representation model is adopted and has quite high accuracy, the obtained question generating model has a quite good effect.

Optionally, the semantic representation model in this embodiment may be a pre-trained model known in the art, such as a bidirectional encoder representation from transformers (BERT), an enhanced representation from knowledge Integration (ERNIE), or the like.

With the technical solution of this embodiment, at least one corresponding answer fragment A may be extracted for each obtained paragraph text P, and then, based on each group (P, A), the corresponding Q may be generated with the above-mentioned pre-trained question generating model, thereby obtaining each triple sample (Q, P, A). With the above-mentioned solution, a large number of triple samples (Q, P, A) may be generated for a large number of acquired paragraph text screens. With the technical solution of this embodiment, the generated triple samples (Q, P, A) have quite high accuracy, and may provide a large number of training samples for sequencing paragraphs and training a reading comprehension model, thus saving the cost for manually annotating the samples. Meanwhile, a search and question-answering system may be supported by means of retrieval according to a kv.

In the method for generating a triple sample according to this embodiment, the paragraph text in the triple sample is acquired; the at least one answer fragment is extracted from the paragraph text; the corresponding questions are generated by adopting the pre-trained question generating model based on the paragraph text and each answer fragment respectively, so as to obtain the triple sample. In this embodiment, since trained based on the pre-trained semantic representation model, the pre-trained question generating model has quite good accuracy, and therefore, the triple sample (Q, P, A) generated with the question generating model has quite high accuracy.

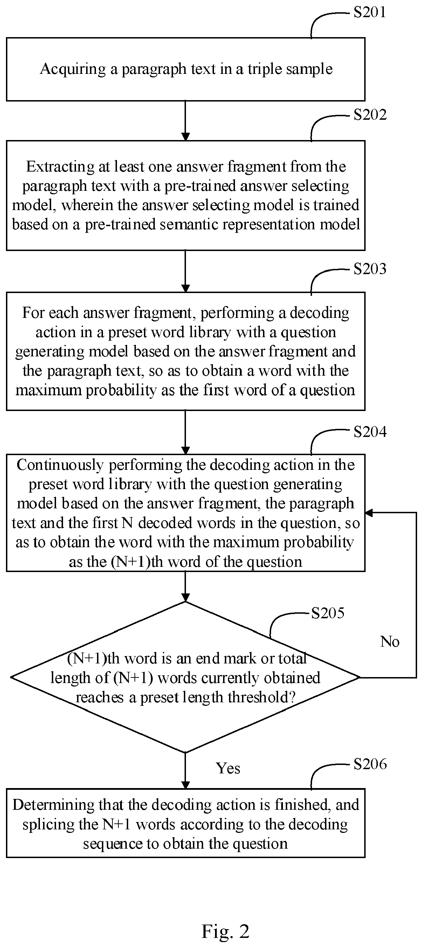

FIG. 2 is a schematic diagram according to a second embodiment of the present application; as shown in Fig. 2, the technical solution of the method for generating a triplet sample according to this embodiment of the present application is further described in more detail based on the technical solution of the embodiment shown in Fig. 1. As shown in Fig. 2, the method for generating a triplet sample according to this embodiment may include the following steps:
S201: acquiring a paragraph text in the triple sample;
   the implementation of this step is the same as the implementation of the step S101 in the above-mentioned embodiment shown in Fig. 1, detailed reference is made to the relevant description of the above-mentioned embodiment, and details are not repeated herein.
S202: extracting at least one answer fragment from the paragraph text with a pre-trained answer selecting model, wherein the answer selecting model is trained based on a pre-trained semantic representation model;
   the step S202 is an implementation of the step S102 in the embodiment shown in Fig. 1. In this implementation, the answer selecting model is adopted to extract at least one answer fragment from a paragraph. For example, optionally, the step S202 may include the following steps:
   (1) predicting probabilities of all candidate answer fragments in the paragraph text serving as the answer fragment with the pre-trained answer selecting model; and
   (2) selecting at least one of all the candidate answer fragments with the maximum probability as the at least one answer fragment.
   Specifically, in the implementation of this embodiment, when the answer fragment is extracted, the answer selecting model is required to analyze all the candidate answer fragments in the paragraph text. Specifically, word segmentation may be performed on the paragraph text, and for example, N segmented words T₁, T₂, ..., T_{N} may be obtained. Then, each segmented word may be independently used as one candidate answer fragment, and each segmented word and at least one adjacent segmented word may form one candidate answer fragment. For example, all the following candidate answer fragments may be obtained according to all possible lengths for segmentation of the candidate answer fragments from the first segmented word: T₁, T₁T₂, T₁T₂ T₃, ..., T₁...T_{N}, T₂, T₂T₃, T₂T₃ T₄, ..., T₂...T_{N}, ..., T_{N-2}, T_{N-2}T_{N-1}, T_{N-2}T_{N-1}T_{N}, T_{N-1}, T_{N-1}T_{N}, T_{N}. The answer selecting model in this embodiment may predict the probability of each candidate answer fragment with an encoding action of an encoding layer and prediction of a prediction layer. Then, TopN candidate answer fragments with the maximum probability may be selected according to requirements as the answer fragments to be selected, and N may be a positive integer greater than or equal to 1.
   By screening the answer fragments with the above-mentioned answer selecting model, the accuracy of the screened candidate answer fragments may be guaranteed effectively, so as to guarantee the accuracy of the triple samples (Q, P, A) which are extracted subsequently.
   In addition, optionally, the step S102 of extracting at least one answer fragment from the paragraph text in the embodiment shown in Fig. 1 may include extracting at least one answer fragment from the paragraph text according to a preset answer-fragment extracting rule.
   For example, in this embodiment, a person skilled in the art may extract the corresponding answer-fragment extracting rule by analyzing the answer fragments which may be used as answers in all paragraph texts in the art, and then extract the at least one answer fragment from the paragraph text based on the answer-fragment extracting rule. Specifically, one, two or more answer-fragment extracting rules may be preset according to actual requirements.
   By screening the answer fragments with the above-mentioned answer-fragment extracting rule, the accuracy of the screened candidate answer fragments may also be guaranteed effectively, so as to guarantee the accuracy of the triple samples (Q, P, A) which are extracted subsequently.
S203: for each answer fragment, performing a decoding action in a preset word library with a question generating model based on the answer fragment and the paragraph text, so as to obtain the word with the maximum probability as the first word of a question;
S204: continuously performing the decoding action in the preset word library with the question generating model based on the answer fragment, the paragraph text and the first N decoded words in the question, so as to obtain the word with the maximum probability as the (N+1)th word of the question, wherein N is greater than or equal to 1;
S205: judging whether the (N+1)th word is an end mark or whether the total length of the N+1 words which are currently obtained reaches a preset length threshold; if yes, proceeding with step S206; otherwise, returning to the step S204;
S206: determining that the decoding action is finished, and splicing the N+1 words according to the decoding sequence to obtain the question.

The above-mentioned steps S203-S206 are an implementation of the step S103 in the embodiment shown in Fig. 1.

In this embodiment, in the process of generating the question, not all the words in the question are generated at a time, but the words are generated one by one.

For example, in the process of generating the corresponding question for each answer fragment, the extracted answer fragment and the paragraph text are input into the question generating model, and the question generating model may perform the decoding action in the preset word library based on the input information, so as to acquire the word with the maximum probability as the first word of the question. The preset word library may be a pre-established word library including all segmented words of one field, and may be provided in the question generating model or outside the question generating model, but may be called at any time when the question generating model is in use.

Similarly, a cyclic decoding process is performed in the question generating model and starts from the decoding action of the 2nd word, and based on the answer fragment, the paragraph text and the first N decoded words, the decoding action is continuously performed in the preset word library, so as to obtain the word with the maximum probability as the (N+1)th word of the question; N is greater than or equal to 1.

Starting from the 2nd word, whether the (N+1)th word which is currently decoded is the end mark is detected after the decoding action, and meanwhile, whether the total length of the N+1 words which are currently decoded reaches the preset length threshold; the decoding action is stopped when one condition is met, and the decoded N+1 words are spliced according to the decoding sequence to form the question to be generated. Otherwise, the decoding action is performed continuously with the step S204, and so on, until the decoding process is finished and the question is generated.

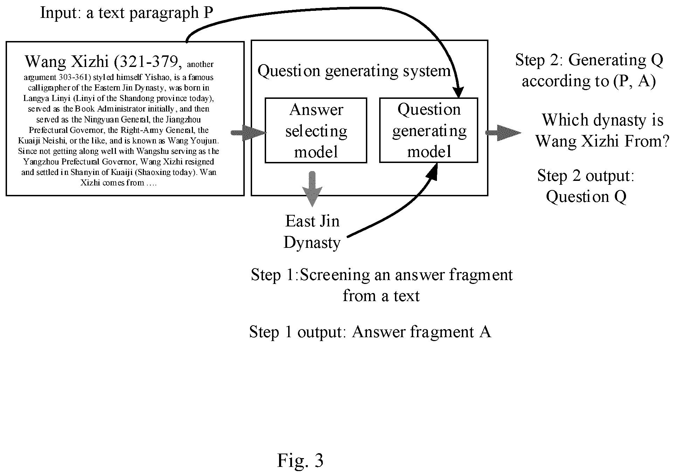

For example, Fig. 3 is an exemplary view of the embodiment shown in Fig. 2. As shown in Fig. 3, the answer selecting model and the question generating model constitute a question generating system as an example. The answer selecting model is configured to complete the work in step1 of selecting the answer fragment A from a provided text paragraph P. The question generating model is configured to complete the work in step2 of performing the decoding action based on the text paragraph P and the answer fragment A, so as to acquire the corresponding question Q.

As shown in Fig. 3, taking a text paragraph P as an example, the text paragraph P is: Wang Xizhi (321-379, another argument 303-361) styled himself Yishao, is a famous calligrapher of the Eastern Jin Dynasty, was born in Langya Linyi (Linyi of the Shandong province today), served as the Book Administrator initially, and then served as the Ningyuan General, the Jiangzhou Prefectural Governor, the Right-Army General, the Kuaiji Neishi, or the like, and is known as Wang Youjun. Since not getting along well with Wangshu serving as the Yangzhou Prefectural Governor, Wang Xizhi resigned and settled in Shanyin of Kuaiji (Shaoxing today). Wan Xizhi comes from ....

Then, with the method for generating a triple sample according to this embodiment, from the acquired text paragraph P, an answer fragment A (for example, "the Eastern Jin Dynasty" in Fig. 3) is extracted by using the answer selecting model, and further with the question generating model in this embodiment, the corresponding question Q, for example, "which dynasty is Wang Xizhi from" in Fig. 3, may be generated based on the input text paragraph P and the answer fragment A "the Eastern Jin Dynasty". Fig. 3 shows only one implementation, and in practical applications, in the manner of this embodiment, the triple (Q, P, A) may be generated in any field based on any paragraph text.

With the above-mentioned technical solution of the method for generating a triple sample according to this embodiment, the answer fragment is extracted from the paragraph text with the pre-trained answer selecting model, and the corresponding question is generated with the pre-trained question generating model based on the paragraph text and the answer fragment; since trained based on the pre-trained semantic representation model, the adopted answer selecting model and the adopted question generating model have quite high accuracy, thus guaranteeing the quite high accuracy of the generated triple (Q, P, A).

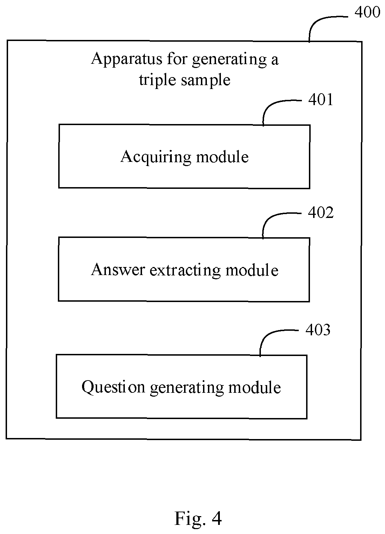

Fig. 4 is a schematic diagram according to a third embodiment of the present application; as shown in Fig. 4, this embodiment provides an apparatus for generating a triplet sample, including:
an acquiring module 401 configured to acquire a paragraph text in the triple sample;
an answer extracting module 402 configured to extract at least one answer fragment from the paragraph text; and
a question generating module 403 configured to generate corresponding questions by adopting a pre-trained question generating model based on the paragraph text and each answer fragment respectively, so as to obtain the triple sample, wherein the pre-trained question generating model is trained based on a pre-trained semantic representation model.

The apparatus for generating a triple sample according to this embodiment has the same implementation as the above-mentioned relevant method embodiment by adopting the above-mentioned modules to implement the implementation principle and the technical effects of generation of the triple sample, detailed reference may be made to the above-mentioned description of the relevant embodiment, and details are not repeated herein.

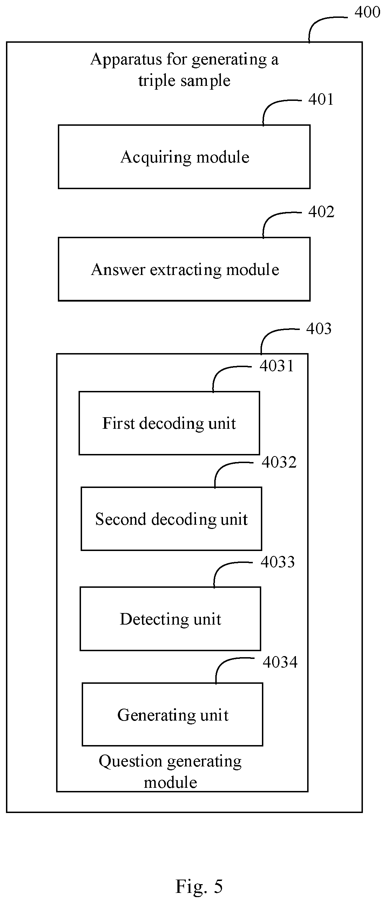

FIG. 5 is a schematic diagram according to a fourth embodiment of the present application; as shown in Fig. 5, the technical solution of the apparatus for generating a triplet sample according to this embodiment of the present application is further described in more detail based on the technical solution of the embodiment shown in Fig. 4.

In the apparatus 400 for generating a triple sample according to this embodiment, the answer extracting module 402 is configured to:
extract at least one answer fragment from the paragraph text according to a preset answer-fragment extracting rule;
or
extract at least one answer fragment from the paragraph text with a pre-trained answer selecting model, wherein the answer selecting model is trained based on a pre-trained semantic representation model.

Further, the answer extracting module 402 is configured to:
predict probabilities of all candidate answer fragments in the paragraph text serving as the answer fragment with the answer selecting model; and
select at least one of all the candidate answer fragments with the maximum probability as the at least one answer fragment.

Further, optionally, as shown in Fig. 5, in the apparatus 400 for generating a triple sample according to this embodiment, the question generating module 403 includes:
a first decoding unit 4031 configured to, for each answer fragment, perform a decoding action in a preset word library with a question generating model based on the answer fragment and the paragraph text, so as to obtain the word with the maximum probability as the first word of a question;
a second decoding unit 4032 configured to continuously perform the decoding action in the preset word library with the question generating model based on the answer fragment, the paragraph text and the first N decoded words in the question, so as to obtain the word with the maximum probability as the (N+1)th word of the question, wherein N is greater than or equal to 1;
a detecting unit 4033 configured to judge whether the (N+1)th word is an end mark or whether the total length of the N+1 words which are currently obtained reaches a preset length threshold; and
a generating unit 4034 configured to, if yes, determine that the decoding action is finished, and splice the N+1 words according to the decoding sequence to obtain the question.

The apparatus for generating a triple sample according to this embodiment has the same implementation as the above-mentioned relevant method embodiment by adopting the above-mentioned modules to implement the implementation principle and the technical effects of generation of the triple sample, detailed reference may be made to the above-mentioned description of the relevant embodiment, and details are not repeated herein.

According to the embodiments of the present application, there are also provided an electronic device and a readable storage medium.

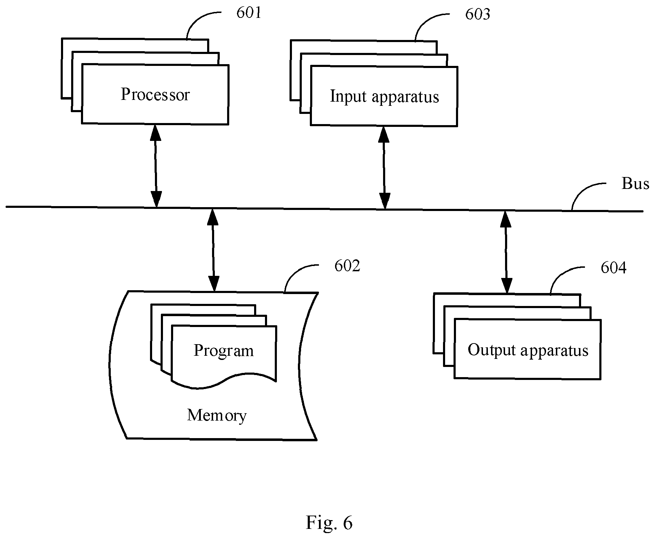

Fig. 6 is a block diagram of an electronic device configured to implement a method for generating a triple sample according to the embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present application described and/or claimed herein.

As shown in Fig. 6, the electronic device includes one or more processors 601, a memory 602, and interfaces configured to connect the various components, including high-speed interfaces and low-speed interfaces. The various components are interconnected using different buses and may be mounted at a common motherboard or in other manners as desired. The processor may process instructions for execution within the electronic device, including instructions stored in or at the memory to display graphical information for a GUI at an external input/output apparatus, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 6, one processor 601 is taken as an example.

The memory 602 is configured as the non-transitory computer readable storage medium according to the present application. The memory stores instructions executable by the at least one processor to cause the at least one processor to perform a method for generating a triple sample according to the present application. The non-transitory computer readable storage medium according to the present application stores computer instructions for causing a computer to perform the method for generating a triple sample according to the present application.

The memory 602 which is a non-transitory computer readable storage medium may be configured to store non-transitory software programs, non-transitory computer executable programs and modules, such as program instructions/modules corresponding to the method for generating a triple sample according to the embodiments of the present application (for example, the relevant modules shown in Figs. 4 and 5). The processor 601 executes various functional applications and data processing of a server, that is, implements the method for generating a triple sample according to the above-mentioned embodiments, by running the non-transitory software programs, instructions, and modules stored in the memory 602.

The memory 602 may include a program storage area and a data storage area, wherein the program storage area may store an operating system and an application program required for at least one function; the data storage area may store data created according to use of the electronic device for implementing the method for generating a triple sample, or the like. Furthermore, the memory 602 may include a high-speed random access memory, or a non-transitory memory, such as at least one magnetic disk storage device, a flash memory device, or other non-transitory solid state storage devices. In some embodiments, optionally, the memory 602 may include memories remote from the processor 601, and such remote memories may be connected to the electronic device for implementing the method for generating a triple sample via a network. Examples of such a network include, but are not limited to, the Internet, intranets, local area networks, mobile communication networks, and combinations thereof.

The electronic device for implementing the method for generating a triple sample may further include an input apparatus 603 and an output apparatus 604. The processor 601, the memory 602, the input apparatus 603 and the output apparatus 604 may be connected by a bus or other means, and Fig. 6 takes the connection by a bus as an example.

The input apparatus 603 may receive input numeric or character information and generate key signal input related to user settings and function control of the electronic device for implementing the method for generating a triple sample, such as a touch screen, a keypad, a mouse, a track pad, a touch pad, a pointing stick, one or more mouse buttons, a trackball, a joystick, or the like. The output apparatus 604 may include a display device, an auxiliary lighting apparatus (for example, an LED) and a tactile feedback apparatus (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, ASICs (application specific integrated circuits), computer hardware, firmware, software, and/or combinations thereof. These various implementations may be implemented in one or more computer programs which are executable and/or interpretable on a programmable system including at least one programmable processor, and the programmable processor may be special or general, and may receive data and instructions from, and transmitting data and instructions to, a storage system, at least one input apparatus, and at least one output apparatus.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLDs)) for providing machine instructions and/or data to a programmable processor, including a machine readable medium which receives machine instructions as a machine readable signal. The term "machine readable signal" refers to any signal for providing machine instructions and/or data to a programmable processor.

To provide interaction with a user, the systems and technologies described here may be implemented on a computer having: a display apparatus (for example, a CRT (cathode ray tube) or LCD (liquid crystal display) monitor) for displaying information to a user; and a keyboard and a pointing apparatus (for example, a mouse or a trackball) by which a user may provide input to the computer. Other kinds of apparatuses may also be used to provide interaction with a user; for example, feedback provided to a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN), the Internet and a blockchain network.

A computer system may include a client and a server. Generally, the client and the server are remote from each other and interact through the communication network. The relationship between the client and the server is generated by virtue of computer programs which are run on respective computers and have a client-server relationship to each other.

With the technical solution of the embodiments of the present application, the paragraph text in the triple sample is acquired; the at least one answer fragment is extracted from the paragraph text; the corresponding questions are generated by adopting the pre-trained question generating model based on the paragraph text and each answer fragment respectively, so as to obtain the triple sample. In this embodiment, since trained based on the pre-trained semantic representation model, the pre-trained question generating model has quite good accuracy, and therefore, the triple sample (Q, P, A) generated with the question generating model has quite high accuracy.

With the technical solution of the embodiments of the present application, the answer fragment is extracted from the paragraph text with the pre-trained answer selecting model, and the corresponding question is generated with the pre-trained question generating model based on the paragraph text and the answer fragment; since trained based on the pre-trained semantic representation model, the adopted answer selecting model and the adopted question generating model have quite high accuracy, thus guaranteeing the quite high accuracy of the generated triple (Q, P, A).

It should be understood that various forms of the flows shown above may be used and reordered, and steps may be added or deleted. For example, the steps described in the present application may be executed in parallel, sequentially, or in different orders, and are not limited herein as long as the desired results of the technical solution disclosed in the present application may be achieved.

The above-mentioned embodiments are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

## Claims

1. A method for generating a triplet sample, wherein the method comprises:
acquiring (S101) a paragraph text in the triple sample;
extracting (S102) at least one answer fragment from the paragraph text; and
generating (S103) corresponding questions by adopting a pre-trained question generating model based on the paragraph text and each answer fragment respectively, so as to obtain the triple sample, wherein the pre-trained question generating model is trained based on a pre-trained semantic representation model.

2. The method according to claim 1, wherein the extracting at least one answer fragment from the paragraph text comprises:
extracting the at least one answer fragment from the paragraph text according to a preset answer-fragment extracting rule.

3. The method according to claim 1, wherein the extracting at least one answer fragment from the paragraph text comprises:
extracting the at least one answer fragment from the paragraph text with a pre-trained answer selecting model, wherein the answer selecting model is trained based on a pre-trained semantic representation model.

4. The method according to claim 3, wherein the extracting at least one answer fragment from the paragraph text with a pre-trained answer selecting model comprises:
predicting probabilities of all candidate answer fragments in the paragraph text serving as the answer fragment with the answer selecting model; and
selecting at least one of all the candidate answer fragments with the maximum probability as the at least one answer fragment.

5. The method according to any one of claims 1 to 4, wherein the generating corresponding questions by adopting a pre-trained question generating model based on the paragraph text and each answer fragment respectively comprises:
for each answer fragment, performing a decoding action in a preset word library with the question generating model based on the answer fragment and the paragraph text, so as to obtain the word with the maximum probability as the first word of the question;
continuously performing the decoding action in the preset word library with the question generating model based on the answer fragment, the paragraph text and the first N decoded words in the question, so as to obtain the word with the maximum probability as the (N+1)th word of the question, wherein N is greater than or equal to 1;
judging whether the (N+1)th word is an end mark or whether the total length of the N+1 words which are currently obtained reaches a preset length threshold; and
if yes, determining that the decoding action is finished, and splicing the N+1 words according to the decoding sequence to obtain the question.

6. An apparatus (400) for generating a triplet sample, wherein the apparatus comprises:
an acquiring module (401) configured to acquire a paragraph text in the triple sample;
an answer extracting module (402) configured to extract at least one answer fragment from the paragraph text; and
a question generating module (403) configured to generate corresponding questions by adopting a pre-trained question generating model based on the paragraph text and each answer fragment respectively, so as to obtain the triple sample, wherein the pre-trained question generating model is trained based on a pre-trained semantic representation model.

7. The apparatus (400) according to claim 6, wherein the answer extracting module (402) is configured to:
extract the at least one answer fragment from the paragraph text according to a preset answer-fragment extracting rule.

8. The apparatus (400) according to claim 6, wherein the answer extracting module (402) is configured to:
extract the at least one answer fragment from the paragraph text with a pre-trained answer selecting model, wherein the answer selecting model is trained based on a pre-trained semantic representation model.

9. The apparatus (400) according to claim 8, wherein the answer extracting module (402) is configured to:
predict probabilities of all candidate answer fragments in the paragraph text serving as the answer fragment with the answer selecting model; and
select at least one of all the candidate answer fragments with the maximum probability as the at least one answer fragment.

10. The apparatus (400) according to any one of claims 6 to 9, wherein the question generating module (403) comprises:
a first decoding unit (4031) configured to, for each answer fragment, perform a decoding action in a preset word library with the question generating model based on the answer fragment and the paragraph text, so as to obtain the word with the maximum probability as the first word of the question;
a second decoding unit (4032) configured to continuously perform the decoding action in the preset word library with the question generating model based on the answer fragment, the paragraph text and the first N decoded words in the question, so as to obtain the word with the maximum probability as the (N+1)th word of the question, wherein N is greater than or equal to 1;
a detecting unit (4033) configured to judge whether the (N+1)th word is an end mark or whether the total length of the N+1 words which are currently obtained reaches a preset length threshold; and
a generating unit (4034) configured to, if yes, determine that the decoding action is finished, and splice the N+1 words according to the decoding sequence to obtain the question.

11. An electronic device, comprising:
at least one processor; and
a memory connected with the at least one processor communicatively;
wherein the memory stores instructions executable by the at least one processor to cause the at least one processor to perform the method according to any one of claims 1 to 5.

12. A non-transitory computer readable storage medium with computer instructions stored thereon, wherein the computer instructions are used for causing a computer to perform the method according to any one of claims 1 to 5.

13. A computer program product comprising instructions which, when the program is executed by a computer, cause the computer to perform the method according to any one of claims 1 to 5.
